# EUROPÄISCHE PATENTSCHRIFT

(11) **EP 0 785 094 B1**
(45) Veröffentlichungstag und Bekanntmachung des Hinweises auf die Patenterteilung: **22.03.2000**
(21) Anmeldenummer: 97100392.6
(22) Anmeldetag: 11.01.1997
(51) Int. Cl.: B44C 5/04, B44F 11/06, B32B 27/04, B32B 29/00, A47B 96/18

(54) **Verfahren zur Herstellung einer Schichtpressstoffplatte mit Kacheldekor**
Process for making a high pressure decorative laminate with a tile pattern
Procédé pour fabriquer un stratifié à haute pression pourvu d'un dessin décoratif en forme de carreaux

(30) Priorität: 20.01.1996 DE 19602064
(43) Veröffentlichungstag der Anmeldung: 23.07.1997
(73) Patentinhaber: Westag & Getalit AG, 33378 Rheda-Wiedenbrück (DE)
(72) Erfinder: Stefaniak, Istvan, Dipl.-Ing., 33397 Rietberg (DE)
(74) Vertreter: Elbertzhagen, Otto, Dipl.-Ing.

(56) Entgegenhaltungen:
- EP-A- 0 009 813
- DE-A- 1 910 679
- GB-A- 2 054 458
- US-A- 4 581 255
- PATENT ABSTRACTS OF JAPAN vol. 097, no. 001, 31.Januar 1997 & JP 08 224851 A (OKURA IND CO LTD), 3.September 1996,

## Beschreibung

Die Erfindung bezieht sich auf ein Verfahren zur Herstellung einer Schichtpreßstoffplatte mit einem Kacheldekor gemäß den Gattungsmerkmalen des Patentanspruchs 1. Des weiteren betrifft die Erfindung eine nach diesem Verfahren hergestellte, dekorative Schichtpreßstoffplatte entsprechend den Gattungsmerkmalen des Patentanspruchs 9.

Es ist bekannt, solche Schichtpreßstoffplatten mit einem Kacheldekor herzustellen, indem man für die das Kachelmuster aufweisende Deckschicht Dekorpapierbahnen verwendet, die mit einem Kachelmuster bedruckt sind. Zum Bedrucken der Dekorpapierbahnen benötigt man einen Druckzylindersatz, der auf ein bestimmtes Dekorbild festgelegt ist. Man kann auf diesem Weg allenfalls noch farbliche Varianten des jeweiligen Kachelmusters drucken, für abweichende Kachelkonfigurationen benötigte man separate Druckzylindersätze, was man wegen des damit verbundenen Aufwandes vermeidet.

Weiter nachteilig nach dem bekannten Herstellungsverfahren ist, daß man nur eine durchgehend flächige Kachelmusterimitation an der Sichtseite der Schichtpreßstoffplatte erhält. Man kann also dreidimensionale Kachelmuster nicht nachbilden, was vor allem die zwischen den Rändern der benachbarten Kacheln oder Fliesen vertieft liegenden Oberseiten der Kachelfugen betrifft. Denn die dekorative Deckschicht einer Schichtpreßstoffplatte besteht aus Lagen von bedruckten Dekorpapieren, die für den Verbund in einer Schichtpreßstoffplatte beharzt werden müssen. Bei den entsprechenden Vorfertigungsgängen schrumpft infolge der Feuchtbehandlung bei der Imprägnierung das bedruckte Dekorpapier unkontrolliert und unregelmäßig. Die Folge bei einem in regelmäßiger Wiedergabe aufgedruckten Kachelmuster ist, daß sich die fertig verpreßte Schichtpreßstoffplatte nicht auf ein exaktes Fixmaß einstellen läßt und eine Prägung an der Sichtseite entlang der Kachelfugen, um deren vertiefte Lage naturgetreu nachbilden zu können, nicht möglich ist, weil der Fugenverlauf unregelmäßig ist und nicht exakt vorherbestimmt werden kann.

Man hat deshalb schon Dekorplatten mit einem Kachelmuster anderweitig aus thermoplastischen Kunststoffen hergestellt, die entsprechend der Nachbildung der einzelnen Kacheln und der Kachelfugen partiell unterschiedlich eingefärbt sind. Zwar kann man hierbei vertieft liegende Kachelfugen nachbilden, im übrigen gelingt jedoch die Nachbildung des Kachelmusters nur unvollkommen. Des weiteren haben derartige Kunststoffplatten Nachteile hinsichtlich mechanischer Festigkeit, Lichtbeständigkeit oder Entflammbarkeit, wodurch die Einsatzmöglichkeiten begrenzt sind.

Aus der DE-A 1910679 ist eine Schichtpreßstoffplatte bekannt, deren Oberseite eine dekorative, flächige Musterung aufweist. Die Musterung wird von mindestens zwei unterschiedliche Färbung und/oder unterschiedlichen Farbtonwert und/oder unterschiedlichen Dekoraufdruck aufweisenden Papierlagen gebildet. Diese Papierlagen überlappen sich in bestimmten Flächenbereichen der betreffenden Platte und sind zusammen mit den übrigen Papierschichten der Platte verpreßt.

Der Erfindung liegt die Aufgabe zugrunde, ein Herstellungsverfahren für eine Schichtpreßstoffplatte mit Kacheldekor und eine solche dekorative Schichtpreßstoffplatte vorzuschlagen, um mit einfachen Mitteln bei großer Variationsbreite eine weitgehend naturgetreue Nachbildung des Kachelmusters zu ermöglichen.

Diese Aufgabe wird bei einem Verfahren der gattungsbildenden Art nach den kennzeichnenden Merkmalen des Patentanspruchs 1 und bei einer gattungsbildenden Schichtpreßstoffplatte nach den kennzeichnenden Merkmalen des Patentanspruchs 9 gelöst.

Für die Erfindung ist wesentlich, mit der aus den einzelnen Kachelausschnitten gebildeten dekorativen Deckschicht der Schichtpreßstoffplatte das Kachelmuster sowohl hinsichtlich der Form- als auch der Farbgebung und bzgl. der Oberflächenstruktur in beliebiger Variation nachbilden zu können. Denn für das Herstellen der einzelnen Kachelausschnitte stehen Dekorpapiere mit einem beliebigen Druck zur Verfügung, wobei es nicht erforderlich ist, das Dekorpapier mit einem Kachelmuster zu bedrucken. So können die einzelnen Kachelausschnitte auch aus uni bedrucktem Dekorpapier ausgestanzt werden. Der bei der notwendigen Beharzung auftretende Verzug des Dekorpapieres spielt keine Rolle, weil das Ausschneiden der einzelnen Kachelnachbildungen erst nach der Imprägnierung, also nach der Beharzung des Dekorpapiers vorgenommen wird.

Grundsätzlich kann die Nachbildung der Kachelfugen, soweit es deren Farbgebung betrifft, durch eine zwischen den Kachelausschnitten sichtbar bleibende Kernschicht der Schichtpreßstoffplatte erfolgen. Damit man bzgl. der Kachelfugen jedoch größere Variationsmöglichkeiten hat, verwendet man hierfür in der Deckschicht ein eigenes Dekorpapier, welches zwischen die Kachelausschnitte und die die Kernschicht der Schichtpreßstoffplatte bildende Papierlagen eingelegt wird. Dieses Dekorpapier kann als durchgehender Papierbogen verwendet werden, der zur Sichtseite der fertigen Dekorplatte hin durch die Kachelausschnitte abgedeckt ist und lediglich im Bereich der Kachelfugen sichtbar bleibt.

Bei einer Verfliesung mit echten Kacheln wird die Verfugung nachträglich so vorgenommen, daß die Kachelfugen mit ihrer freiliegenden Oberseite gegenüber den Oberseiten der Kacheln oder Fliesen vertieft liegen. Diese dreidimensionale Gestaltung einer Verkachelung kann man bei einer erfindungsgemäß hergestellten Schichtpreßstoffplatte mit einem konstant bleibenden Kacheldekor ohne weiteres nachbilden. Hierzu werden beim Preßvorgang entlang dem exakt vorgegebenen Verlauf der Kachelfugen Rillen zur Nachbildung der vertieft liegenden Oberseiten der Fugen eingeprägt, womit die neue Schichtpreßstoffplatte an der Sichtseite einer Verfliesung weitestgehend naturgetreu nachgestaltet werden kann.

Für die Verwendung einer erfindungsgemäß hergestellten dekorativen Schichtpreßstoffplatte auf Küchenarbeitsplatten ist es von weiterem Vorteil, wenn in einem Arbeitsgang mit der Verpressung entlang einem der Ränder der Schichtpreßstoffplatte seitlich an die Nachbildung des Kachelmusters anschließend ein Dekorpapierstreifen mit einer aufgedruckten Holzimitation in der Deckschicht mit verpreßt wird. Dieser Bereich der Schichtpreßstoffplatte mit der Holzimitation kann beim Aufbringen auf eine entsprechende Trägerplatte nach unten gebogen werden, um die Vorderkante der Arbeitsplatte zu bilden. Man erspart sich an dieser Stelle das Anbringen eines separaten Umleimers an der Arbeitsplatte und vermeidet eine Fuge zwischen dem Kachelmuster und der vorderseitigen Arbeitsplattenkante, durch die hindurch Wasser in die Trägerplatte eindringen könnte. So verhindert man, daß die in aller Regel aus einem Spanplattenmaterial bestehende Trägerplatte aufquillt.

Weitere vorteilhafte Ausgestaltungsmerkmale der Erfindung ergeben sich aus den Unteransprüchen.

Die Erfindung wird nachfolgend anhand der Zeichnung noch näher erläutert. Dabei zeigen:
- Fig. 1: eine schematische Wiedergabe des Legens der einzelnen Schichten für eine Schichtpreßstoffplatte mit einem dekorativen Kachelmuster und
- Fig. 2: eine schematische Ansicht eines Ausschnittes einer Schichtpreßstoffplatte mit einem Kacheldekor teilweise im Schnitt.

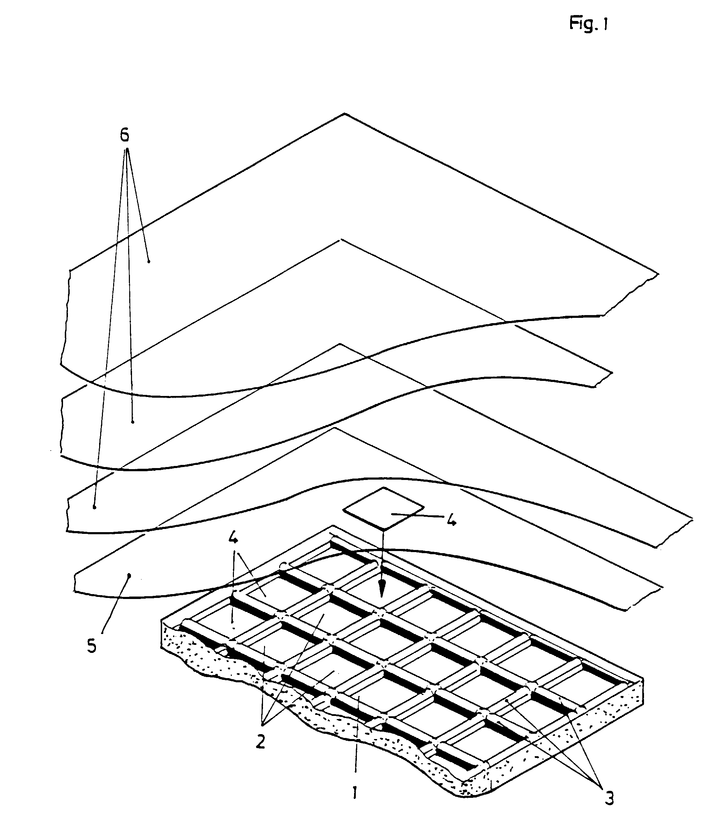

In Figur 1 erkennt man einen Abschnitt eines Preßwerkzeugs 1, welches für den Einsatz in einer Heißpresse bestimmt ist, die für das Pressen von dekorativen preßstoffplatten geeignet ist. Es versteht sich, daß der Preßraum der Presse von einem weiteren, obenliegenden Preßwerkzeug begrenzt wird, bei dem es sich in üblicher Weise um eine plane Platte oder einen planen Pressentisch handelt. Das in Figur 1 dargestellte Preßwerkzeug 1 wird untenliegend eingesetzt, wobei es an seiner Oberseite eine besondere Struktur entsprechend dem Negativ eines Kachelmusters hat. So weist das Werkzeug 1 sehr flache Mulden oder Kassetten 2 auf, die jeweils durch erhaben vorstehende Rippen 3 eingegrenzt sind. Jede dieser Mulden oder Kassetten 2 dient zur Aufnahme eines einzelnen Kachelausschnittes 4, der zuvor aus einem Dekorpapierbogen ausgeschnitten oder ausgestanzt worden ist. Dieser Dekorpapierbogen ist in einer solchen Weise bedruckt worden, wie es dem Aussehen einer natürlichen Kachel oder Fliese entspricht. Außerdem ist für den nachfolgenden Verbund der Dekorpapierbogen beharzt, womit die daraus ausgestanzten Kachelausschnitte 4 für den anschließenden Preßvorgang vorbereitet sind.

Auf das Preßwerkzeug 1 mit den in den Mulden oder Kassetten 2 einliegenden Kachelausschnitten 4 wird ein Dekorbogen 5 gelegt, der entsprechend dem Aussehen einer Kachelfuge bedruckt ist und gegebenenfalls mit einer Oberflächenstruktur versehen sein kann. Weiter werden auf dem Dekorpapierbogen 5 mehrere Lagen 6 von beharzten Kern- oder Kraftpapieren aufgelegt.

Es versteht sich, daß bei der beschriebenen Anordnung die Schichtpreßstoffplatte beginnend mit ihrer Sichtseite von unten nach oben, also kopfliegend aufgebaut wird. Dies geschieht zweckmäßig außerhalb der Heißpresse und hierzu kann das Preßwerkzeug 1 zugleich auch Legewerkzeug sein, welches erst im nachhinein nach der Belegung in die Presse eingegeben wird.

Die Kachelausschnitte 4 und der Dekorpapierbogen 5 sind mit Melaminharz getränkt, um hierdurch in der Deckschicht der Schichtpreßstoffplatte eine zusätzliche Einfärbung zu vermeiden. Hingegen können die weiteren Papierlagen 6, welche die Kernschicht der Schichtpreßstoffplatte bilden, mit Phenolharz beharzt sein, durch welches sich hier nach dem Preßvorgang eine dunkle Einfärbung ergibt.

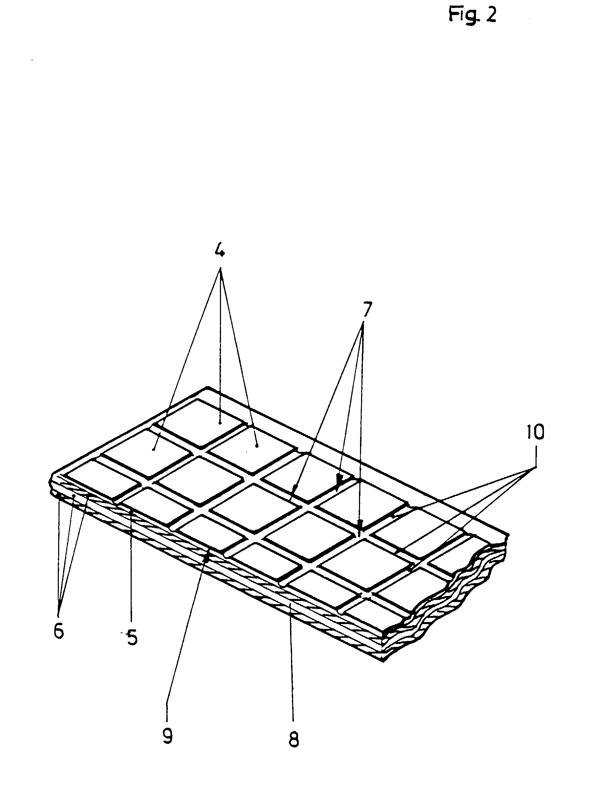

Figur 2, welche einen Ausschnitt der fertig verpreßten Schichtpreßstoffplatte darstellt, veranschaulicht den Aufbau einer solchen Platte mit einer Kernschicht 8, die aus den harzgebundenen Papierlagen 6 nach Figur 1 gebildet ist. Darüber befindet sich zur Sichtseite hin eine dekorative Deckschicht 9, die sich aus den melaminharzgebundenen Kachelausschnitten 4 und dem Dekorpapierbogen 5 zusammensetzt. Die Kachelausschnitte 4 sind, wie bei einer echten Verkachelung oder Verfliesung auch, voneinander in Abstand angeordnet, um dazwischen Kachelfugen 7 nachzubilden, deren Aussehen und Oberflächenstruktur durch den Dekorpapierbogen 5 bedingt ist, welcher zwischen den Kachelausschnitten 4 an der Sichtseite der Schichtpreßstoffplatte sichtbar bleibt.

Der Dekorpapierbogen 5 und gegebenenfalls die benachbarten Papierlagen der Kernschicht 8 sind nach innen hin eingewölbt, soweit es den Verlauf der Kachelfugen 7 betrifft, wodurch entlang dieser Kachelfugen 7 Rillen 10 zwischen den Kachelausschnitten 4 gebildet sind. Diese Rillen 10 ergeben eine gegenüber den Sichtseiten der Kachelausschnitte 4 vertiefte Anordnung der Außenseiten der Kachelfugen 7, wie es auch bei einer echten Verkachelung oder Verfliesung der Fall ist.

## Patentansprüche

1. Verfahren zur Herstellung einer Schichtpreßstoffplatte mit einer Kernschicht sowie mit einer dekorativen Deckschicht, die ein Kachelmuster aufweist und bei der zwischen den einzelnen Kachelnachbildungen Kachelfugen nachgebildet sind,
dadurch gekennzeichnet,
daß aus einem bedruckten und anschließend beharzten Dekorpapier die einzelnen Kachelnachbildungen ausgeschnitten oder -gestanzt werden, die so erhaltenen, einzelnen Kachelausschnitte entsprechend dem Kachelmuster lagerichtig einschließlich einem die Kachelfugen darstellenden Abstand angeordnet und mit die Kachelausschnitte übergreifenden, beharzten Papierlagen zur der Schichtpreßstoffplatte warm verpreßt werden, wonach zumindest die Kachelausschnitte die dekorative Deckschicht der Schichtpreßstoffplatte bilden.

2. Verfahren nach Anspruch 1,
dadurch gekennzeichnet,
daß zwischen die Kachelausschnitte und die die Kernschicht bildenden Papierlagen ein dekorativer, beharzter Papierbogen zur wahlweisen Nachbildung der Kachelfugen gelegt wird.

3. Verfahren nach Anspruch 1 oder 2,
dadurch gekennzeichnet,
daß entlang einem der Ränder der Schichtpreßstoffplatte seitlich an die Nachbildung des Kachelmusters anschlieschleißend ein Dekorpapierstreifen mit einer aufgedruckten Holzimitation in der Deckschicht mit verpreßt wird.

4. Verfahren nach einem der Ansprüche 1 bis 3,
dadurch gekennzeichnet,
daß für die die Kernschicht bildenden Papierlagen mit Phenolharz getränkte Kern- oder Kraftpapiere verwendet werden.

5. Verfahren nach einem der Ansprüche 1 bis 4,
dadurch gekennzeichnet,
daß das die Deckschicht bildende Dekorpapier und gegebenenfalls der die Deckschicht ergänzende, dekorative Papierbogen mit Melaminharz beharzt sind.

6. Verfahren nach einem der Ansprüche 1 bis 5,
dadurch gekennzeichnet,
daß beim Preßvorgang entlang der nachzubildenden Kachelfugen Rillen zur Nachbildung vertieft liegender Fugen eingeprägt werden.

7. Verfahren nach einem der Ansprüche 1 bis 6,
dadurch gekennzeichnet,
daß ein untenliegendes Preßwerkzeug verwendet wird, welches kassettenartige Mulden und dazwischen patritzenartige Rippen zum Prägen der Rillen hat, wobei in die Mulden je ein einzelner Kachelausschnitt eingelegt und darüber gegebenenfalls zunächst der dekorative Papierbogen und weiter die die Kernschicht bildenden Papierlagen gelegt werden.

8. Verfahren nach Anspruch 7,
dadurch gekennzeichnet,
daß das Preßwerkzeug zugleich ein außerhalb der Prese bedienbares Legewerkzeug ist.

9. Schichtpreßstoffplatte mit einem Kachelmuster an der Sichtseite, bei der zwischen den einzelnen Kachelnachbildungen Kachelfugen nachgebildet sind und die aus einer aus harzgebundenen Papierlagen gebildeten Kernschicht und aus einer harzgebundenen, das Kachelmuster bildenden Deckschicht besteht,
dadurch gekennzeichnet,
daß die Deckschicht (9) einzelne, aus bedrucktem Dekorpapier ausgeschnittene oder -gestanzte Kachelausschnitte (4) aufweist, welche im Abstand der nachgebildeten Kachelfugen (7) angeordnet sind.

10. Schichtpreßstoffplatte nach Anspruch 9,
dadurch gekennzeichnet,
daß die Deckschicht (9) der Schichtpreßstoffplatte eine Schicht aus Dekorpapier (5) aufweist, welche zwischen den Kachelausschnitten (4) und der Kernschicht (8) angeordnet ist und letztere im Bereich der nachgebildeten Kachelfugen (7) zur Sichtseite hin abdeckt.

11. Schichtpreßstoffplatte nach Anspruch 9 oder 10,
dadurch gekennzeichnet,
daß an der Sichtseite entlang der Kachelfugen (7) in deren Breite Rillen (10) eingeprägt sind.

12. Schichtpreßstoffplatte nach einem der Ansprüche 9 bis 11,
dadurch gekennzeichnet,
daß die Kernschicht (8) der Schichtpreßstoffplatte phenolharzgebunden ist.

13. Schichtpreßstoffplatte nach einem der Ansprüche 9 bis 12,
dadurch gekennzeichnet,
daß die Deckschicht (9) der Schichtpreßstoffplatte melaminharzgebunden ist.

14. Schichtpreßstoffplatte nach einem der Ansprüche 9 bis 13,
dadurch gekennzeichnet,
daß entlang einem ihrer Ränder seitlich an das nachgebildete Kachelmuster anschließend in die Deckschicht (9) ein Dekorpapierstreifen mit einer aufgedruckten Holzimitation eingepreßt ist.

## Claims

1. Process for making a high pressure laminated plate with a core layer as well as with a decorative top layer which has a tile pattern and wherein tile gaps are simulated between the individual tile simulations,
characterised in that
the individual tile simulations are cut or punched out from a printed and then resin impregnated decorative paper, the individual tile cut-outs thus obtained are arranged correctly positioned corresponding to the tile pattern including a spacing representing the tile gaps and are then hot-pressed with the resin impregnated paper layers which engage over the tile cut-outs to produce the high pressure laminated plate after which at least the tile cut-outs form the decorative top layer of the laminated plate.

2. Process according to claim 1
characterised in that
a decorative resin impregnated paper sheet is placed between the tile cut-outs and the paper layers forming the core layer to selectively imitate the tile gaps.

3. Process according to claim 1 or 2
characterised in that
a decorative paper strip with a printed-on wood imitation is pressed in with the top layer adjoining the simulation of the tile pattern at the side along one of the edges of the high-pressure laminated plate.

4. Process according to one of claims 1 to 3
characterised in that
core or Kraft brown papers impregnated with phenol resin are used for the paper layers forming the core layer.

5. Process according to one of claims 1 to 4
characterised in that
the decorative paper forming the top layer and where applicable the decorative paper sheet completing the top layer are impregnated with melamine resin.

6. Process according to one of claims 1 to 5
characterised in that
during the pressing process grooves are imprinted along the tile gaps which are to be simulated in order to simulate indented gaps.

7. Process according to one of claims 1 to 6
characterised in that
an underlying pressing tool is used which has cassette-like troughs and punch-like ribs inbetween to indent the grooves wherein one individual tile cut-out is placed in each trough and where applicable at first the decorative paper sheet and then the paper layers forming the core layer are placed above same.

8. Process according to claim 7
characterised in that
the pressing tool is at the same time a laying tool which can be used outside of the press.

9. High-pressure laminated plate with a tile pattern on the visible side wherein tile gaps are simulated between the individual tile simulations and which consists of a core layer formed from resin-bonded paper layers and from a resin-bonded top layer forming the tile pattern,
characterised in that
the top layer (9) has individual tile cut-outs (4) punched or cut out from printed decorative paper and arranged at intervals corresponding to the tile gaps (7) simulated.

10. High pressure laminated plate according to claim 9
characterised in that
the top layer (9) of the high pressure laminated plate has a layer of decorative paper (5) which is arranged between the tile cut-outs (4) and the core layer (8) and covers the latter in the area of the simulated tile gaps (7) towards the visible side.

11. High pressure laminated plate according to claim 9 or 10
characterised in that
grooves (10) are imprinted widthways on the visible side along the tile gaps (7).

12. High pressure laminated plate according to one of claims 9 to 11
characterised in that
the core layer (8) of the high pressure laminated plate is bonded with phenol resin.

13. High pressure laminated plate according to one of claims 9 to 13
characterised in that
the top layer (9) of the high pressure laminated plate is bonded with melamine resin.

14. High pressure laminated plate according to one of claims 9 to 13
characterised in that
a decorative paper strip with a printed-on wood imitation is pressed into the top layer along one of its edges adjoining the simulated tile pattern at the side.

## Revendications

1. Procédé de fabrication d'un stratifié à haute pression pourvu d'un dessin décoratif en forme de carreaux entre lesquels des joints sont imités,
caratérisé en ce que les imitations de carreaux sont découpées ou matricées en carreaux individuels dans un papier décoratif ayant été imprimé, puis enduit de résine, les carreaux individuels ainsi obtenus étant ensuite disposés conformément au motif à un intervalle représentant les joints et pressés à chaud avec des couches de papier enduites de résine qui enjamles carreaux individuels pour former le stratifié, ce après quoi les carreaux, au moins, forment la couche de recouvrement décorative.

2. Procédé selon la revendication 1,
caractérisé en ce que,
entre les découpes de carreaux et les couches de papier formant la base, une feuille de papier décoratif, enduit est insérée pour imiter, au choix, les joints.

3. Procédé selon la revendication 1 ou 2,
caractérisé en ce que,
le long de l'un des bords du stratifié, latéralement par rapport aux imitations de carreaux, une bande de papier décoratif, imprimé en imitation bois, est pressée ensuite dans la couche de recouvrement.

4. Procédé selon l'une des revendications 1 à 3,
caractérisé en ce que
des couches de papier kraft ou de papier support collées à la résine phénolique sont utilisées pour former le noyau.

5. Procédé selon l'une des revendications 1 à 4,
caractérisé en ce que
le papier décoratif formant la couche de recouvrement et, le cas échéant, la feuille de papier décoratif complétant la couche décorative sont imprégnés de résine de mélamine.

6. Procédé selon l'une des revendications 1 à 5,
caractérisé en ce que
des rainures sont empreintes le long des imitations de joints pour donner l'impression de profondeur des joints par rapport au carreaux.

7. Procédé selon l'une des revendications 1 à 6,
caractérisé en ce que
un outil à mouler par compression est utilisé, par en bas, lequel présente des excavations en forme de caissons séparés par des nervures genre poinçons pour empreindre les rainures, les carreaux étant placés individuellement dans chaque caisson, puis, le cas échéant, la feuille de papier décoratif disposée dessus et le tout finalement recouvert avec les couches de papier formant le noyau ou couche de base.

8. Procédé selon la revendication 7,
caractérisé en ce que
l'outil à mouler par compression est simultanément un outil de pose qui peut être utilisé hors de la presse.

9. Stratifié pourvu, du côté visible, d'un dessin décoratif en forme de carreaux entre lesquels des joints sont imités, ce stratifié consistant en un noyau formé de couches de papier collées à la résine et en une couche de recouvrement enduite de résine et pourvue du dessin en forme de carreaux,
caractérisé en ce que
la couche de recouvrement (9) présente des carreaux (4) découpés ou matricés, séparés les uns des autres par un intervalle correspondant aux imitations de joints (7).

10. Stratifié selon la revendication 9,
caractérisé en ce que
la couche de recouvrement (9) du stratifié présente une couche en papier décoratif (5) qui est disposée entre les carreaux découpés (4) et la couche de base (8) qu'elle masque, du côté visible, dans la zone des imitations de joints (7).

11. Stratifié selon la revendication 9 ou 10,
caractérisé en ce que
des rainures sont empreintes, du côté visible, le long des joints (7) et dans leur largeur.

12. Stratifié selon l'une des revendications 9 à 11,
caractérisé en ce que
la couche de base (8) du stratifié est encollé à la résine phénolique.

13. Stratifié selon l'une des revendications 9 à 12,
caractérisé en ce que
la couche de recouvrement (9) est collée à la résine à la mélamine.

14. Stratifié selon l'une des revendications 9 à 13,
caractérisé en ce que,
le long de l'un de ses bords, latéralement par rapport au dessin à carreaux, une bande de papier décoratif, imprimé imitation bois, est ensuite pressée dans la couche de recouvrement (9).
